# EUROPEAN PATENT APPLICATION

(11) **EP 3 147 845 A1**
(43) Date of publication of application: **29.03.2017**
(21) Application number: 16185600.0
(22) Date of filing: 25.08.2016
(51) Int. Cl.: G06Q 20/04, G06Q 20/20, G06Q 20/40

(54) **CHECKOUT SYSTEM, ACCOUNTING MACHINE, AND CONTROL PROGRAM**

(30) Priority: 24.09.2015 JP 2015186925
(71) Applicant: Toshiba TEC Kabushiki Kaisha, Tokyo 141-0032 (JP)
(72) Inventor: SHIMAZAKI, Takeshi, Shinagawa-ku, Tokyo 141-8562 (JP)
(74) Representative: Takeuchi, Maya

(57) **Abstract**

An accounting machine according to an embodiment processes a single payment for a plurality of transactions. The accounting machine includes a communication interface, an input device, and a controller. The input device receives input of different transaction identifications that uniquely identify each of the plurality of transactions. The communication interface transmits a plurality of requests for transaction information corresponding to each of the plurality of transactions, each request including one of the different transaction identifications. The communication interface receives the different transaction information corresponding to each different transaction identification included in the plurality of requests. The controller integrates the received different transaction information into an integrated transaction information. The controller also processes, in a single payment operation, payment with respect to each different transaction information included in the integrated transaction information.

## Description

### FIELD

Embodiments described herein relate generally to a checkout system, an accounting machine, a control program, and a computer program product relating thereto.

### BACKGROUND

Conventionally, a semi-self-service type checkout system is located in a store such as a supermarket. The semi-self-service type checkout system is located with a registration machine in which merchandise is registered and which generates transaction information for settlement processing and an accounting machine which performs the settlement processing based on the transaction information regarding the merchandise registered in the registration machine. A cashier (salesperson) operates the registration machine and a shopper operates the accounting machine.

In the checkout system, the transaction information generated in the registration machine is transferred to the separately located accounting machine. The accounting machine which receives transaction information for a first transaction is not allowed to receive new transaction information until settlement is completed with respect to the first transaction.

The registration machine generates the transaction information on a per transaction basis. Accordingly, when a shopper performs multiple separate transactions when purchasing a plurality of merchandise, the registration machine generates separate transaction information for each of the plurality of separate transactions. In this case, the shopper is required to operate the accounting machine and separately settle each transaction.

In a case where a plurality of shoppers (for example, a family) separately purchase multiple items of merchandise that are registered in different registration machines, the shoppers also have to operate accounting machine, or even multiple different accounting machines, and separately settle the different transactions, in a similar way as described above.

In such a conventional checkout system, operations for settlement in the accounting machine are required to be performed separately regarding the different transaction information processed as different transactions in the registration machine. Thus, the operations take additional time. Furthermore, settlement results (receipt or the like) are output as a plurality of different transactions. Therefore, merchandise purchasing management becomes complicated.

To solve such problems, there is provided a checkout system comprising:
at least one registration device; and
a plurality of accounting machines, wherein
the at least one registration devices includes:
   a first communication interface,
   a first input device configured to receive input of merchandise information for merchandise items to be purchased in a transaction,
   a storage unit configured to store transaction information including the input merchandise information for each of one or more of the merchandise items to be purchased in the transaction, and
   a first controller configured to:
      generate a transaction identification that uniquely identifies the transaction information corresponding to the transaction,
      control the first communication interface to transmit the transaction information in correspondence with the transaction
   identification, and
each of the plurality of accounting machines includes
   a second communication interface,
   a second input device configured to receive input of a user instruction, and
   a second controller configured to:
      in response to the user instruction, control the second communication interface to transmit a plurality of requests for transaction identification corresponding to different transactions, each request including different transaction identifications,
      control the second communication interface to receive the different transaction information corresponding to each different transaction identification included in the plurality of requests,
      integrate the received different transaction information into an integrated transaction information, and
      process, in a single payment operation, payment with respect to each different transaction information included in the integrated transaction information.

Preferably, the at least one registration device further includes a printer configured to print, for each transaction, an accounting receipt that includes the transaction identification.

Preferably still, each of the plurality of accounting machines further includes:
a scanner configured to input each of the different transaction identification by scanning the accounting receipt.

Preferably yet, the first communication interface transmits the transaction information in correspondence with the transaction identification to a server.

Suitably, the second communication interface transmits the plurality of requests for transaction identification corresponding to different transactions to the server, and receives the different transaction information corresponding to each different transaction identification included in the plurality of requests from the server.

Suitably still, the first communication interface receives at least one of the plurality of requests, and transmits the transaction information in correspondence with the transaction identification to one of the accounting machines in response to the received at least one request.

Suitably yet, the second communication interface transmits the plurality of requests for transaction identification corresponding to different transactions to the at least one registration machine, and receives the different transaction information corresponding to each different transaction identification included in the plurality of requests from the at least one registration machine.

The invention also relates to an accounting machine for processing a single payment for a plurality of transactions, the machine comprising:
a communication interface;
an input device configured to receive input of different transaction identification that uniquely identifies each of the plurality of transactions; and
a controller configured to:
   control the communication interface to transmit a plurality of requests for transaction information corresponding to each of the plurality of transactions, each request including one of the different transaction identifications,
   control the communication interface to receive the different transaction information corresponding to each different transaction identification included in the plurality of requests,
   integrate the received different transaction information into an integrated transaction information, and
   process, in a single payment operation, payment with respect to each different transaction information included in the integrated transaction information.

Preferably, the input device is a scanner configured to input each of the different transaction identification by scanning an accounting receipt.

Preferably still, the communication interface transmits the plurality of requests for transaction identification corresponding to different transactions to a server, and receives the different transaction information corresponding to each different transaction identification included in the plurality of requests from a server.

Preferably yet, the communication interface transmits the plurality of requests for transaction identification corresponding to different transactions to at least one registration machine that generated the transaction identification, and receives the different transaction information corresponding to each different transaction identification included in the plurality of requests from the at least one registration machine.

Typically, the accounting machine further comprises a display that displays details of the integrated transaction information.

Typically still, the details include a total payment required for the plurality of transactions.

Typically yet, the accounting machine further comprises:
a second input device that receives an input selecting whether to process the payment for the plurality of transactions or to process the payment for a single transaction, wherein, when the input is received selecting to process the payment for a single transaction, the controller is further configured to:
   control the communication interface to transmit one request for transaction information corresponding to the single transaction, the request including one of the different transaction identifications,
   control the communication interface to receive the transaction information corresponding to the transmitted transaction identification included in the request, and
process, in a single payment operation, payment with respect to the received transaction information.

The invention further relates to a non-transitory computer readable médium containing instructions for causing a computer to perform the steps of:
receiving input of different transaction identifications that uniquely identify each of a plurality of transactions;
transmitting a plurality of requests for transaction information corresponding to each of the plurality of transactions, each request including one of the different transaction identifications;
receiving the different transaction information corresponding to each different transaction identification included in the plurality of requests;
integrating the received different transaction information into an integrated transaction information; and
processing, in a single payment operation, payment with respect to each different transaction information included in the integrated transaction information.

Preferably, in the above non-transitory computer readable medium, the different transaction identifications are received from a scanner scanning an accounting receipt.

Preferably still, in the above non-transitory computer readable medium, the plurality of requests for transaction identifications corresponding to different transactions are transmitted to a server, and the different transaction information corresponding to each different transaction identification included in the plurality of requests are received from a server.

Preferably yet, in the above non-transitory computer readable medium, the plurality of requests for transaction identifications corresponding to different transactions are transmitted to at least one registration machine that generated a transaction identification, and the different transaction information corresponding to each different transaction identification included in the plurality of requests are received from the at least one registration machine.

Conveniently, in the above non-transitory computer readable medium, the instructions further cause the computer to perform the step of:
displaying details of the integrated transaction information.

Conveniently still, in the above non-transitory computer readable medium, the details include a total payment required for the plurality of transactions.

### DESCRIPTION OF THE DRAWING

The above and other objects, features and advantages of the present invention will be made apparent from the following description of the preferred embodiments, give as non-limiting examples, with reference to the accompanying drawings, in which:
FIG. 1 is a top view illustrating an example arrangement of a registration machine and a plurality of accounting machines in a checkout system according to an embodiment.
FIG. 2 is a block diagram of an example configuration of the registration machine and the accounting machine.
FIGS. 3 and 4 are flowcharts of an example sequence of operations of a control process of the registration machine.
FIG. 5 illustrates an example registration screen.
FIG. 6 is a flowchart of an example sequence of operations of a control process of the accounting machine.
FIG. 7 illustrates an example collective accounting selection screen.
FIG. 8 illustrates an example accounting receipt read screen.
FIG. 9A to FIG. 9C are diagrams illustrating an example of integrated transaction information in the embodiment.

### DETAILED DESCRIPTION

Described herein is a checkout system capable of performing collective settlement with respect to a plurality of transactions, an accounting machine of the checkout system, and a control program.

An accounting machine according to an embodiment processes a single payment for a plurality of transactions. The accounting machine includes a communication interface, an input device, and a controller. The input device receives input of different transaction identifications that uniquely identify each of the plurality of transactions. The communication interface transmits a plurality of requests for transaction information corresponding to each of the plurality of transactions, each request including one of the different transaction identifications. The communication interface receives the different transaction information corresponding to each different transaction identification included in the plurality of requests. The controller integrates the received different transaction information into an integrated transaction information. The controller also processes, in a single payment operation, payment with respect to each different transaction information included in the integrated transaction information.

In another embodiment, a checkout system is described that has at least one registration device; and a plurality of accounting machines, wherein the at least one registration devices includes: a first communication interface, a first input device configured to receive input of merchandise information for merchandise items to be purchased in a transaction, a storage unit configured to store transaction information including the input merchandise information for each of one or more of the merchandise items to be purchased in the transaction, and a first controller configured to: generate a transaction identification that uniquely identifies the transaction information corresponding to the transaction, control the first communication interface to transmit the transaction information in correspondence with the transaction identification, and each of the plurality of accounting machines includes a second communication interface, a second input device configured to receive input of a user instruction, and a second controller configured to: in response to the user instruction, control the second communication interface to transmit a plurality of requests for transaction identification corresponding to different transactions, each request including different transaction identifications, control the second communication interface to receive the different transaction information corresponding to each different transaction identification included in the plurality of requests, integrate the received different transaction information into an integrated transaction information, and process, in a single payment operation, payment with respect to each different transaction information included in the integrated transaction information.

Hereinafter, description will be made of one embodiment with reference to the accompanying drawings. A checkout system according to the present embodiment is located at a store, for example, a supermarket or the like.

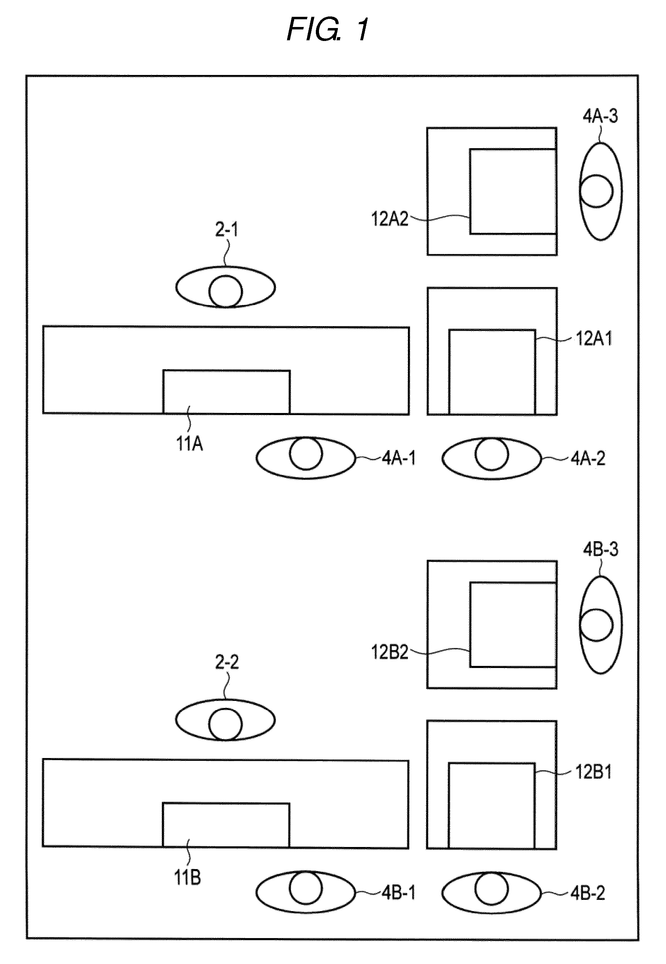

FIG. 1 is a top view illustrating an arrangement of registration machines 11 (11A and 11B) and a plurality of accounting machines 12 (12A1, 12A2, 12B1, and 12B2) in the checkout system according to the present embodiment. The registration machine 11 and the accounting machine 12 are located at a checkout area of a store such as a supermarket. The checkout system illustrated in FIG. 1 includes two registration machines 11A and 11B. Two accounting machines 12A1 and 12A2 are located in the vicinity of the registration machine 11A. Two accounting machines 12B1 and 12B2 are located in the vicinity ofthe registration machine 11B.

The registration machine 11A receives a merchandise code of merchandise intended to be purchased by a shopper 4 (4A-1) as an input and generates transaction information for settlement processing in the accounting machine 12 based on the merchandise code. The registration machine 11A generates the transaction information on a per transaction basis. The transaction information includes merchandise information regarding at least one merchandise and an amount of money (a total transaction amount of money) to be settled. The registration machine 11A is operated by an employee 2-1 called a checker who performs the merchandise registration operation. The registration machine 11A may also perform the same settlement processing as that of the accounting machine 12 by operation of the checker with respect to the transaction information.

The accounting machines 12A1 and 12A2 receive the transaction information generated by the registration machine 11A and perform the settlement processing based on the transaction information. The accounting machines 12A1 and 12A2 are operated by the shopper 4 (4A-2 and 4A-3). The accounting machines 12A1 and 12A2 may be operated by the employee 2-1.

In FIG. 1, the registration machine 11A is mounted on a work table. The work table includes a rectangular top plate, for example. The employee 2-1 performs a scan operation (merchandise registration operation) on the merchandise which the shopper 4A-1 intends to purchase.

The accounting machines 12A1 and 12A2 are arranged in the vicinity of a work table on which, for example, the registration machine 11A is mounted. FIG. 1 illustrates an example in which two accounting machines 12A1 and 12A2 are arranged in the vicinity of the registration machine 11A. Three or more accounting machines 12 may also be located in the vicinity of the registration machine 11A.

The registration machine 11B registers purchased merchandise which the shopper 4 (4B-1) intends to purchase and generates the transaction information. The registration machine 11B is operated by an employee 2-2 called a checker who performs the merchandise registration operation. The registration machine 11B may perform the same settlement processing as that of the accounting machine 12 by operation of the checker with respect to the transaction information.

The accounting machines 12B1 and 12B2 receive the transaction information generated by the registration machine 11B and perform the settlement processing based on the transaction information. The accounting machine 12B1 and 12B2 are operated by the shopper 4 (4B-2 and 4B-3). The accounting machines 12B1 and 12B2 may be operated by the employee 2-2.

The registration machine 11B is configured similar to the registration machine 11A, and detailed description thereof will not be repeated. The accounting machines 12B1 and 12B2 is configured similar to the accounting machines 12A1 and 12A2, and detailed descriptions thereof will not be repeated.

The checkout system according to present embodiment is not limited to the number of registration machines 11. The settlement processing for the transaction information generated by the registration machine 11 is generally executed by the accounting machine 12 located in the vicinity of the registration machine 11 that generated the transaction information, but the settlement processing may be executed in the accounting machine 12 located at a place distant from the registration machine 11. For example, the settlement processing for the transaction information generated by the registration machine 11A may be executed by the accounting machine 12B or the accounting machine 12B.

The checkout system according to the present embodiment can integrate different transaction information generated with respect to each of a plurality of transactions in a single registration machine 11 or different transaction information generated with respect to each of different transactions in different registration machines 11 into a single transaction information and perform collective accounting on the single transaction information in a single accounting machine 12.

For example, when a family is shopping, they can divide among the members of the family a plurality of the merchandise intended for purchase. The members of the family can then each separately register the merchandise in each of the registration machines 11A and 11B. The collective accounting for two different transactions processed by the registration machines 11A, 11B can be performed at one time in, for example, a single accounting machine 12A1.

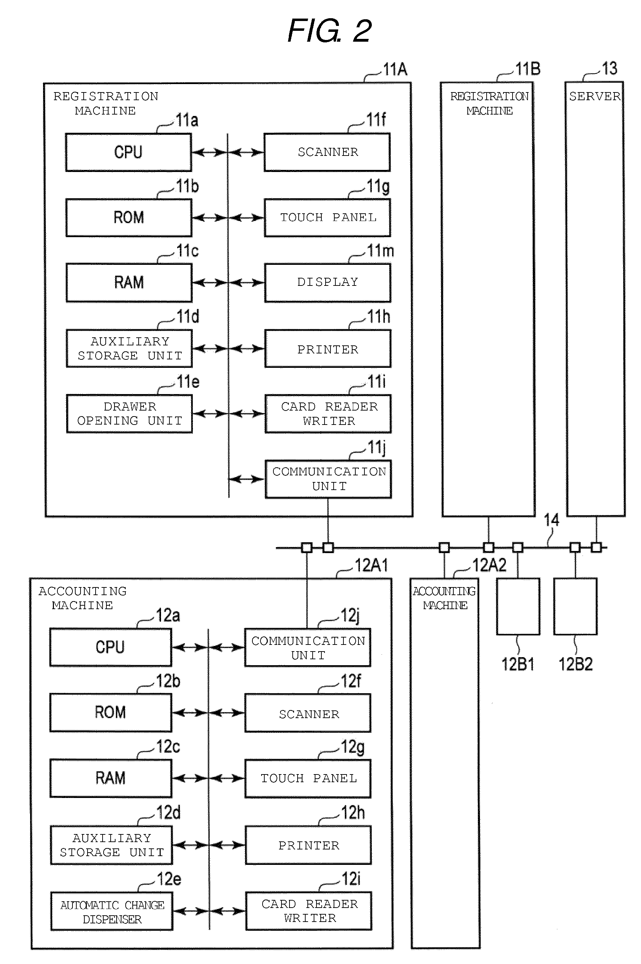

FIG. 2 is a block diagram of an example configuration of the registration machine 11 and the accounting machine 12 according to the present embodiment.

All of the registration machines 11A and 11B and the accounting machines 12A1, 12A2, 12B1 and 12B2 are connected to a network such as a local area network (LAN) 14. A separate communication network such as the Internet or a wireless LAN may be utilized instead of the LAN 14. Otherwise, a configuration in which information is communicated between the registration machines 11A and 11B and the accounting machines 12A1, 12A2, 12B1, and 12B2 through a server 13 (a store computer) may be adopted.

The registration machine 11A may be provided as, at least in part, a computer, and includes, a central processing unit (CPU) 11a, a read-only memory (ROM) 11b, a random-access memory (RAM) 11c, an auxiliary storage unit 11d, a drawer opening unit 11e, a scanner 11f, a touch panel 11 g, a printer 11h, a card reader writer 11i, a communication unit 11j, and a display 11m.

The CPU 11a controls respective units so as to implement various operations of the registration machine 11 based on an operating system, middleware, and an application program stored in the ROM 11b and RAM 11c.

In the ROM 11b and RAM 11c, data referenced in various processing performed by the CPU 11a is stored, in addition to various programs executed by the CPU 11a. The RAM 11c may store a registration merchandise table that includes a transaction code that is unique to a single transaction issued with respect to a single transaction by the shopper 4, and the various merchandise information corresponding to the transaction. The registration merchandise table is recorded as data to be temporarily stored, for example, when the merchandise registration processing is executed.

A program executed by the CPU 11a includes a control program which executes processing for inputting merchandise information (merchandise code or the like) through the scanner 11f, processing for generating transaction information used for settlement processing in accordance with merchandise information registered in the registration merchandise table, processing for generating the transaction code to identify a single transaction (normally, merchandise purchase by a single shopper 4), settlement processing based on the transaction information, and processing for transmitting the transaction information in correspondence with the transaction code to the server 13 or the accounting machine 12.

The auxiliary storage unit 11d stores data used in various processing performed by the CPU 11a or data generated by the processing performed by the CPU 11a. For example, an electric erasable programmable read-only memory (EEPROM) (registered trademark), a hard disk drive (HDD), a solid state drive (SSD) or the like may be used as the auxiliary storage unit 11d.

The drawer opening unit 11e automatically opens a drawer that accommodates money.

The scanner 11f reads a merchandise code from an item of merchandise and inputs merchandise information unique to the merchandise according to optical scanning. The scanner 11f may be a fixed or hand-held type two dimensional code scanner and may also be a type of scanner that identifies merchandise using an image recognition technique. A single or a plurality of scanners 11f may be provided.

The touch panel 11g includes a display device and a touch sensor. The display device displays an arbitrary screen such as a graphical user interface screen (GUI) screen. For example, the display device displays a list of the transaction information (merchandise name, amount of money, or the like) related to the merchandise registered as merchandise to be purchased, a subtotal amount of money, various menus, and a button for inputting a command, or the like. For example, a well-known device such as a color liquid crystal display (LCD) may be utilized as the display device. The touch sensor is arranged in overlap with a display surface of the display device. The touch sensor detects a touch position on the display surface of the display device by an operator and sends the positional information to the CPU 11a. A well-known device may be used as the touch sensor.

The printer 11h is, for example, a thermal printer or a dot impact printer, and prints various character strings, images, code patterns (bar code, two dimensional code, or the like) to issue a transaction receipt in which transaction contents such as a merchandise name, a unit price, a total amount of money is printed, an accounting receipt in which the transaction code for identifying the transaction to be read in the accounting machine 12, or the like. The transaction code may be included in a printed pattern, for example, a barcode.

The card reader writer 11i reads data recorded in a card and writes data onto the card. The card may be various cards in which information relating to accounting processing such as a membership card, and a point card, in addition to a card for settlement such as a credit card, a debit card, electronic money card, and a prepaid card. The card reader writer 11i may be a magnetic device, a contact device, or a contactless device, or may incorporate a plurality of types of devices.

The communication unit 11j communicates with the server 13 and the accounting machine 12 through the LAN 14.

The display 11m can utilize, for example, a color LCD. The display 11m displays, for example, a screen for display a piece of merchandise information registered as purchased merchandise with respect to the shopper 4A-1.

For example, an existing POS terminal may be used as hardware of the registration machine 11A. A configuration of the registration machine 11B is similar to that of the registration machine 11A and description thereof will not be repeated.

The accounting machine 12A1 may be provided, at least in part, a computer, and includes a CPU 12a, a ROM 12b, a RAM 12c, an auxiliary storage unit 12d, an automatic change dispenser 12e, a scanner 12f, a touch panel 12g, a printer 12h, a card reader writer 12i, and a communication unit 12j.

The CPU 12a controls respective units so as to implement various operations of the accounting machine 12A1 based on an operating system, middleware, and an application program stored in the ROM 12b and RAM 12c.

In the ROM 12b and RAM 12c, data referenced in various processing performed by the CPU 12a is stored, in addition to various programs executed by the CPU 12a. Data indicating the transaction code recorded on the accounting receipt which is read by the scanner 12f through the operation by the shopper 4 and the transaction information registered in registration merchandise table and transmitted from the registration machine 11 may be temporarily stored in the RAM 12x.

A program executed by the CPU 12a includes a control program which executes processing for: inputting the transaction code generated in the registration machine 11 based on a code read from the accounting receipt through the scanner 12f, receiving the corresponding transaction information used for the settlement processing, switching whether collective accounting is to be performed or not according to instructions inputted through a selection screen by the shopper 4, integrating different transaction information into a single transaction information, and settlement of the transaction information.

The auxiliary storage unit 12d stores data used in various processing performed by the CPU 12a or data generated in the processing performed by the CPU 12a. For example, an EEPROM, an HDD, an SSD or the like may be use as the auxiliary storage unit 12d.

The automatic change dispenser 12e receives inserted coins and paper money. The automatic change dispenser 12e discharges coins and paper money as change.

The scanner 12f reads data recorded on a medium such as a receipt by optical scanning. For example, the scanner 12f may be used for reading a code pattern printed in the accounting receipt printed by the registration machine 11. The scanner 12f may be a fixed type or a hand-held type two dimensional code scanner and may also be a type of scanner that identifies merchandise using an image recognition technique. A single type of scanner 12f or a plurality of types of scanners 12f may be provided.

The touch panel 12g includes a display device and a touch sensor. The display device displays an arbitrary screen such as a GUI screen. For example, the display device displays a list of the piece of transaction information (merchandise name, amount of money, or the like) related to the merchandise registered as merchandise to be purchased, a subtotal amount of money, various menus, and a button for inputting a command, or the like. For example, a well-known device such as a color LCD may be utilized as the display device. The touch sensor is arranged in overlap with a display surface of the display device. The touch sensor detects a touch position on a display surface of the display device by an operator and sends the positional information to the CPU 12a. A well-known device may be used as the touch sensor.

The printer 12h is, for example, a thermal printer or a dot impact printer, and prints various character strings and images with respect to a receipt sheet to issue a transaction receipt or the like.

The card reader writer 12i reads data recorded in a card and writes data into the card. The card may be various cards in which a piece of information relating to accounting processing such as a membership card, and a point card, in addition to the card for settlement such as a credit card, a debit card, electronic money card, and a prepaid card. The card reader writer 12i may be a magnetic device, a contact device, or a contactless device, or may incorporate a plurality of types of devices.

The communication unit 12j communicates with the server 13 and the registration machine 11 through the LAN 14.

The accounting machine 12A1 is provided with a sensor-such as a thermal sensor, a motion sensor, or the like-which can detect that a shopper 4A-2 approaches the accounting machine 12A1.

For example, an existing self-service POS terminal may be utilized as hardware of the accounting machine 12A1. The configuration of the accounting machines 12A2, 12B1, and 12B2 is similar to that of the accounting machine 12A1 and detailed description thereof will not be repeated.

Next, description will be made with respect to operations of the checkout system according to the present embodiment. The contents of a process which will be described in the following are illustrative only, and various processes capable of obtaining the same result may be appropriately utilized. In the following description, operations of the registration machine 11A and the accounting machine 12A1 will be described by way of an example.

When the registration machine 11A is set to a mode in which a merchandise registration processing can be performed, the CPU 11a starts a control process based on a control program stored in the ROM 11b or the auxiliary storage unit 11d.

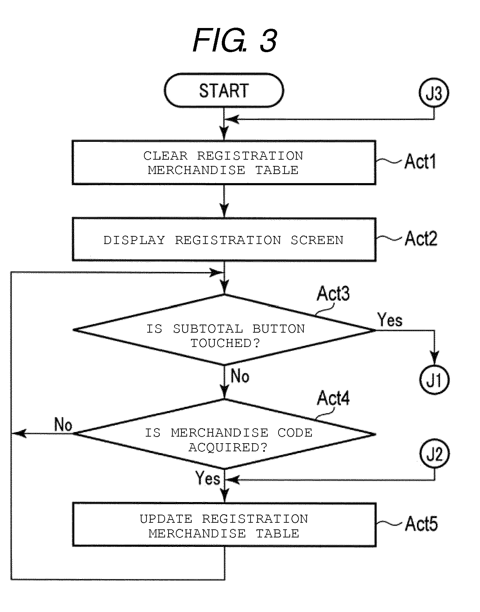

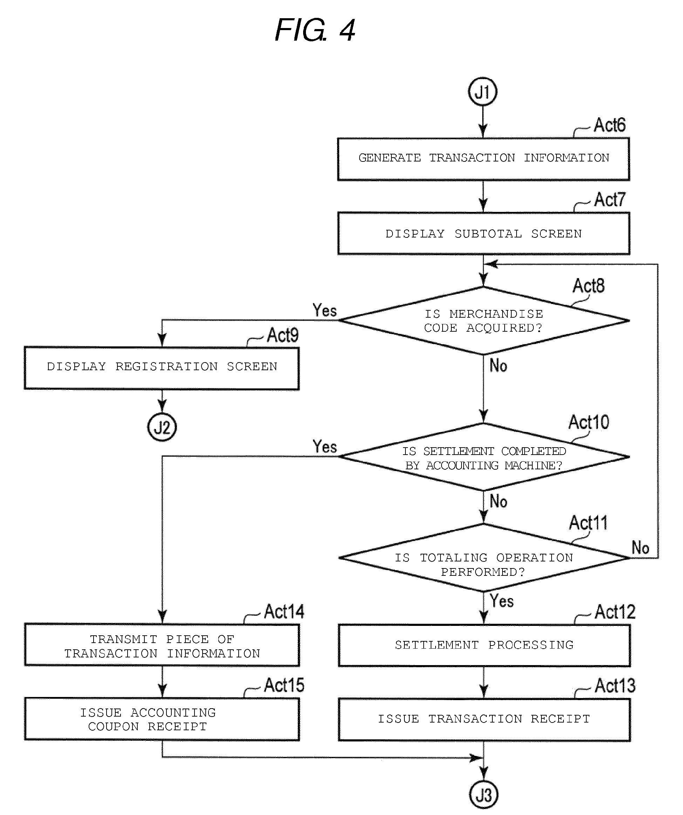

FIG. 3 and FIG. 4 are flowcharts illustrating an example sequence of operations of a control process of the registration machine 11A (CPU 11a) in the present embodiment.

When the control process is started, the CPU 11a clears the contents of the registration merchandise table recorded in the RAM 11c (Act 1). The CPU 11a causes the touch panel 11g to display a registration screen and a registration operation screen (Act 2). The registration screen displays the merchandise information registered in the registration merchandise table and used for allowing the employee 2-1 to confirm the status of implementation of the registration processing. The registration operation screen displays various functional buttons such as a subtotal button and a merchandise button used for designating merchandise by the employee 2-1.

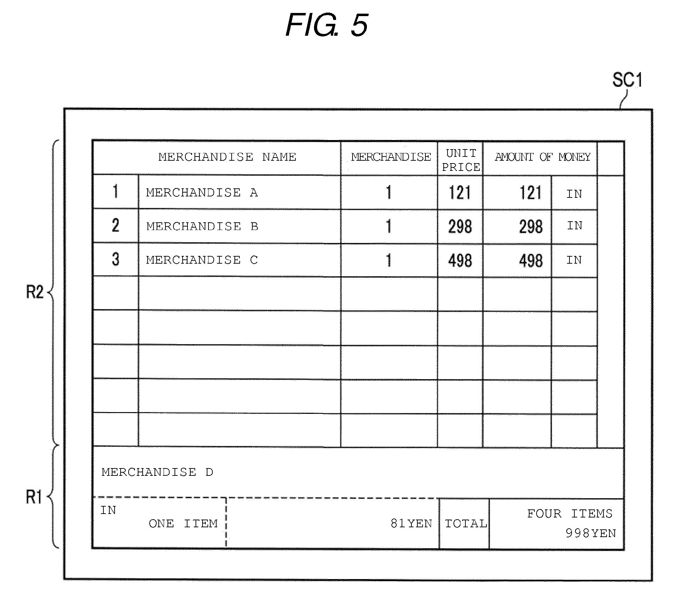

FIG. 5 illustrates an example registration screen SC1 in the present embodiment.

The registration screen SC1 illustrated in FIG. 5 includes régions R1 and R2. A merchandise name, quantity of merchandise, and unit price of the merchandise most recently registered in the registration merchandise table are displayed in the region R1. Also, a total number of registered merchandise and a total amount of money for all of the registered merchandise are displayed in the region R1. A list of merchandise names, the quantity of merchandise, a unit price, and an amount of money of the merchandise previously registered are displayed in the region R2. In the registration screen SC1, only a basic format for displaying various pieces of information related to the registered merchandise is displayed. Various pieces of information related to merchandise registration other than that illustrated in FIG. 5 may also be displayed.

The CPU 11a waits for operation of a subtotal button displayed in the screen of the touch panel 11g or an acquisition of a merchandise code through the scanner 11f in a state where the registration screen and the registration operation screen are displayed.

When it is detected that a merchandise code attached to a merchandise is read by the scanner 11f through the operation of the employee 2-1 (Act 4, Yes), the CPU 11a updates the registration merchandise table with the merchandise information corresponding to the merchandise code (Act 5). The CPU 11a updates the piece of merchandise information of the registration screen SC1 according to the contents of the registration merchandise table after the update.

Thereafter, as described above, each time the employee 2-1 reads the merchandise code using the scanner 11f, the CPU 11a subsequently adds the corresponding merchandise information to the registration merchandise table in accordance with the acquired merchandise code (Act 4, Act 5).

After at least one merchandise is registered, when it is detected that the subtotal button is touched (Act 3, Yes), the CPU 11a generates the transaction information for settlement processing based on the contents registered in the registration merchandise table (Act 6). The transaction information includes information such as the list of the registered merchandise, the total number and the total amount of money for the registered merchandise. The CPU 11a causes the touch panel 11 g to display a subtotal screen which includes information such as the list of the registered merchandise, the total number and the total amount of money of the registered merchandise (Act 7). The subtotal screen is provided with an accounting button to perform totaling processing in the registration machine 11A and a transmit button for designating the accounting processing to be performed in the accounting machine 12.

When it is detected that the merchandise code attached to the merchandise is read by the scanner 11f through the operation by the employee 2-1 (Act 8, Yes), the CPU 11a registers (updates) the merchandise information corresponding to the merchandise code in the registration merchandise table (update) and causes the updated registration screen to be displayed (Act 9).

When it is detected that the accounting button which performs the totaling operation is touched in the subtotal screen (Act 11), the CPU 11a executes settlement processing regarding the transaction information by a payment method requested by a shopper (Act 12), and issues the transaction receipt in which the transaction contents are printed by the printer 11h (Act 13).

When it is detected that the transfer button which designates the accounting processing to be performed in the accounting machine 12 is touched in the subtotal screen (Act 10, Yes), the CPU 11a generates the transaction code for identifying the current transaction and transmits the transaction information in correspondence with the transaction code to the server 13 (Act 14). The CPU 11a causes the printer 11h to issue the accounting receipt in which a code indicating the transaction code is printed (Act 15).

When the accounting processing is executed in the accounting machine 12 on a per transaction basis, the registration machine 11A transmits the transaction information in correspondence with the transaction code to the server 13 and issues the accounting receipt on which the transaction code is recorded.

Therefore, the server 13 records the transaction information in correspondence with the transaction code transmitted from each of the registration machines 11A and 11B included in the checkout system. That is, the server 13 records the transaction information corresponding to a plurality of transactions processed in a single registration machine 11A (or registration machine 11B). The server 13 also records the transaction information corresponding to a plurality of transactions respectively processed in a plurality of registration machines 11A and 11B, which are different from each other, in correspondence with different transaction codes, respectively.

Next, description will be made with respect to operations of the accounting machine 12A1 in the present embodiment.

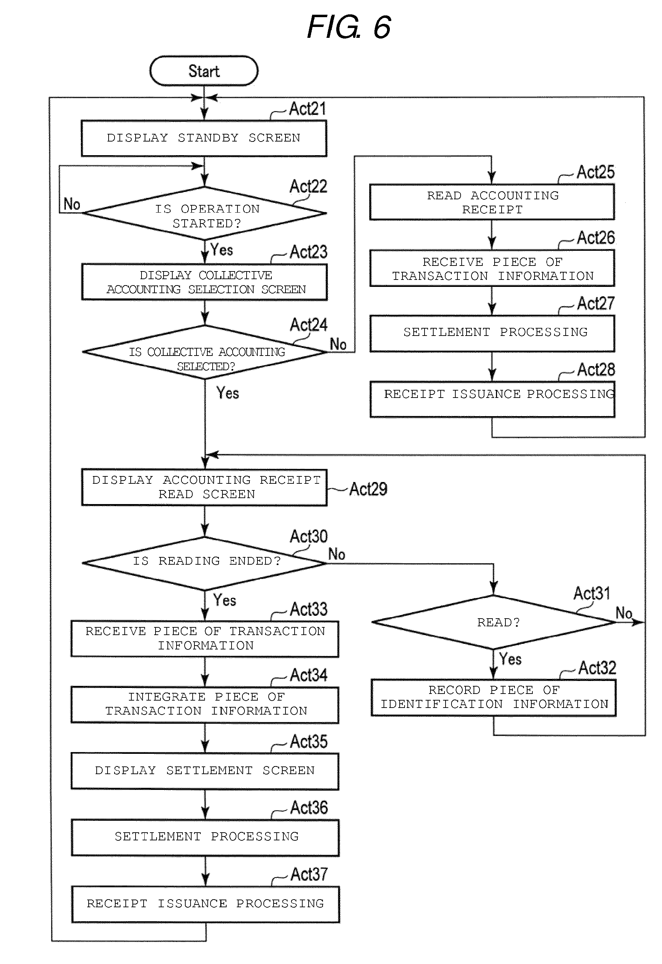

FIG. 6 is a flowchart of an example sequence of operations of a control process of the accounting machine 12A1 (CPU 12a) in the present embodiment.

In an initial state, the accounting machine 12A1 (CPU 12a) causes the touch panel 12g to display a standby screen. The standby screen indicates a state where there is no settlement processing and the information intended to be displayed may be determined arbitrarily. For example, a message indicating that the settlement processing cannot be performed or any image displaying an advertisement or the like as a screen saver is displayed on the standby screen.

In the standby state, the CPU 12a monitors an input instructing a start operation. The input instructing a start operation includes, for example, a touch operation on the touch panel 12g by the shopper 4, detection by the sensor included in the accounting machine 12A1, or the like.

When the input instructing a start operation is detected (Act 22, Yes), the CPU 12a causes the touch panel 12g to display a collective accounting selection screen (Act 23).

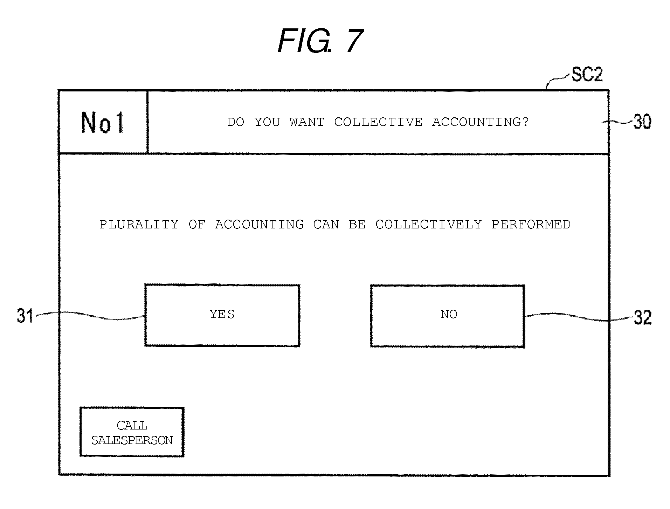

FIG. 7 illustrates an example collective accounting selection screen SC2 in the present embodiment. The collective accounting selection screen SC2 instructs the shopper 4 to select whether a plurality of transactions processed in the registration machine 11 are intended to be subject to collective processing or not. The CPU 12a switches a control between executing a normal settlement processing according to the instruction input through the collective accounting selection screen SC2 and settling by the collective accounting.

In the collective accounting selection screen SC2 illustrated in FIG. 7, in addition to displaying message 30 ("Do you want collective accounting?") for notifying the contents of operation with respect to the screen to the shopper 4, a button 31 ("Yes") for indicating that the shopper agrees to the message 30 and a button 32 ("No") for indicating that the shopper does not agree to the message 30 are displayed.

When the touch operation onto the button 32 ("No") is detected (Act 24, No), the CPU 12a determines the shopper 4 chooses not to perform the collective accounting, and waits for an accounting receipt to be read by the scanner 12f. The shopper 4 operates the scanner 12f to read the accounting receipt. Thus, the scanner 12f detects the transaction code printed in the accounting receipt. The CPU 12a requests the server 13 to transmit the transaction information corresponding to the transaction code input through the scanner 12f based on the transaction code. The server 13 transmits the transaction information in correspondence with the transaction code requested from the accounting machine 12A1 to the accounting machine 12A1.

The accounting machine 12A1 receives the transaction information from the server 13 (Act 26). When the transaction information is received from the server 13, the CPU 12a changes the display of the touch panel 12g to a settlement screen.

The settlement screen receives operations for the settlement processing by the shopper 4 based on the transaction information received from the server 13. In the settlement screen, for example, the total amount of money indicated in the transaction information is displayed. In the settlement screen, a list of the total number of merchandise and the purchased merchandise may be included. When a plurality of settlement methods (payment methods) are possible, the settlement screen includes a button which is used for selecting the settlement method by the shopper 4, or the like.

The CPU 12a detects operation with respect to the settlement screen by shopper 4 and executes the settlement processing according to the operation (Ac t27). The settlement processing settles the total amount of money indicated in the transaction information according to the operation by the shopper 4.

The CPU 12a controls the printer 12h and issues a transaction receipt which includes the transaction code corresponding to the transaction information recorded in the RAM 12c or the auxiliary storage unit 12d and a result of the settlement processing is indicated. Thus, a process regarding a single transaction is ended. Thereafter, the CPU 12a returns to Act 21 and performs the processing after the Act 21 in the same manner as those described above.

When the touch operation on the button 31 ("Yes") of the collective accounting selection screen SC2 is detected (Act 24, Yes), the CPU 12a determines that the shopper 4 chooses to perform the collective accounting and causes the touch panel 12g to display the accounting receipt read screen for the collective accounting (Act 29).

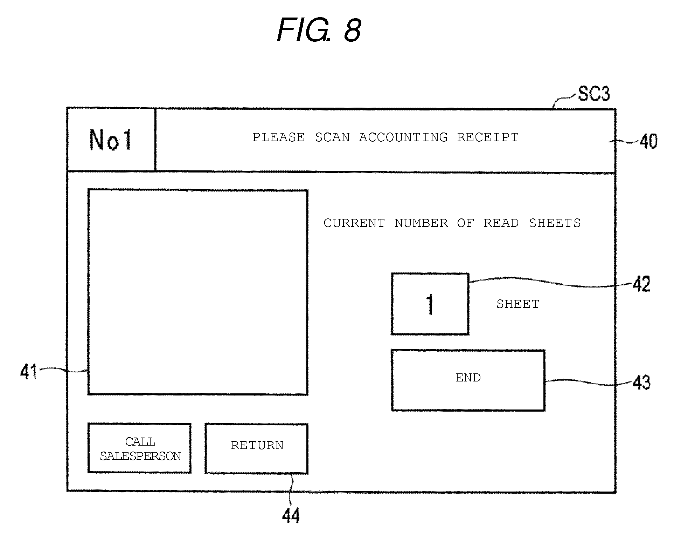

FIG. 8 illustrates an example accounting receipt read screen SC3 in the present embodiment. In a state where the accounting receipt read screen SC3 is displayed, a plurality of accounting receipts may be sequentially scanned by the scanner 12f. Thus, a plurality of transaction codes recorded on a plurality of the accounting coupon receipts may be collectively read.

As illustrated in FIG. 8, a guide image 41 for explaining scanning operation to the shopper 4 and the number of sheets display 42 which displays the number of sheets (i.e., accounting receipts) currently read by scanning and an end button 43 which instructs to end reading of the accounting receipt are displayed in the accounting receipt read screen SC3. In addition, the accounting receipt read screen SC3 includes a message 40 ("Please scan accounting receipt") for instructing an operation with respect to the screen to the shopper 4.

When it is detected that the transaction code recorded on the accounting receipt is read by the scanner 12f (Act 31, Yes), the CPU 12a stores the read transaction code in the RAM 12c (Act 32) and updates the accounting receipt read screen SC3 by adding 1 (one) to a number displayed in the number of sheets display 42 (Act 29).

That is, the shopper 4 operates the scanner 12f to read a plurality of the accounting receipts respectively corresponding to a plurality of transactions for which the shopper 4 intends to perform the collective accounting. Thus, the number of sheets display 42 of the accounting receipt read screen SC3 is subsequently updated. In the RAM 12c, all of the transaction information corresponding to the plurality of transaction codes read from the plurality of the accounting receipts, respectively, are stored.

When reading of the plurality accounting receipts corresponding to the transactions to be subjected to the collective accounting is ended, it is detected that the end button 43 is touched by the shopper 4 (Act 30, Yes). Thereafter, the CPU 12a integrates all of the transaction information (that is, each transaction information corresponding to each of the plurality of read transaction codes) recorded in the RAM 12c. That is, the CPU 12a collects the merchandise information included in each transaction information into an integrated transaction information. Similarly, the CPU 12a calculates the total amount of money for all of merchandise included in each piece transaction information and records the total amount of money in the RAM 12c or the auxiliary storage unit 12d.

The CPU 12a causes the touch panel 12g to display the settlement screen which includes the list of the contents of the integrated transaction information and the total amount of money in order to allow the shopper 4 to confirm the contents of the integrated transaction information (Act 35).

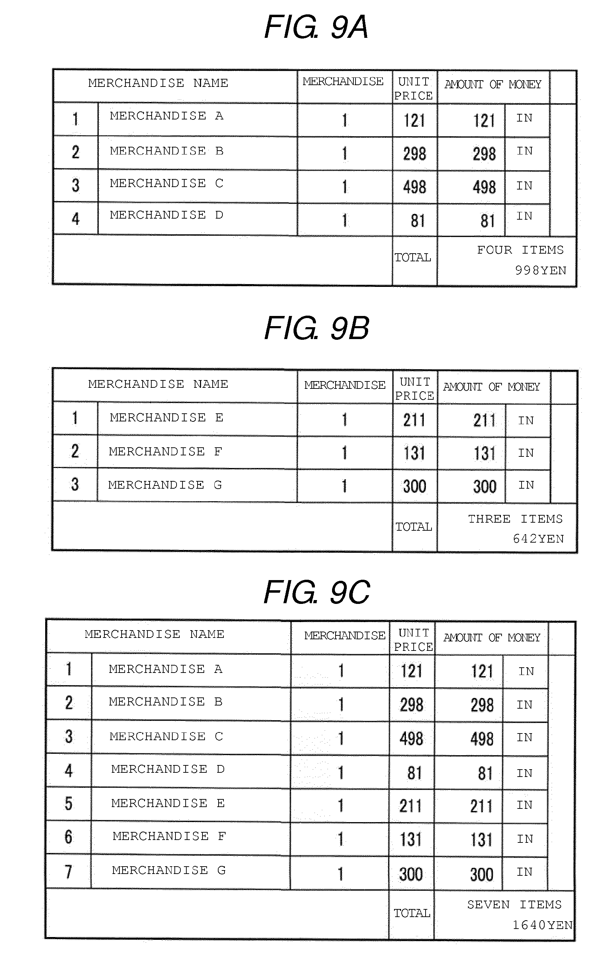

FIG. 9A to FIG. 9C illustrate a specific example of the integration of the transaction information in the present embodiment.

FIG. 9A illustrates, for example, a list of the merchandise included in the transaction information generated in the registration machine 11A. FIG. 9B illustrates a list of the merchandise included in the transaction information generated in the registration machine 11B. For example, he registration machine 11A displays that four merchandise (merchandise A, B, C, and D) are registered and the total amount of money is "998 Yen." The registration machine 11B displays that 3 merchandise (merchandise E, F, and G) are registered and the total amount of money is "642 Yen."

Each transaction information illustrated in FIG. 9A and FIG. 9B is integrated together to generate the integrated transaction information illustrated in FIG. 9C. That is, the integrated transaction information including seven 7 items of merchandise (merchandise A to G) and the total transaction amount of "1640 Yen" is generated. The CPU 12a causes the contents of the integrated transaction information illustrated in FIG. 9C to be displayed in the list in the touch panel 12g.

The list of the integrated transaction information is displayed in the settlement screen, and the CPU 12a causes the settlement screen to be in a form capable of identifying the contents of each transaction. For example, the merchandise information can be classified on a per transaction basis or displayed with a transaction number for identifying the corresponding transaction relative each item of merchandise. Furthermore, the merchandise information included in the integrated transaction information may also be classified (sorted) into each type to be displayed. As such, the contents of the integrated transaction information can be easily identified. Thus, for example, missing of merchandise intended for purchase can be easily confirmed.

The CPU 12a detects the operation with respect to the settlement screen by the shopper 4 and executes the settlement processing in response to this operation (Act 36). That is, the CPU 12a settles the total transaction amount of money of the integrated transaction information recorded in the RAM 12c or the auxiliary storage unit 12d by the settlement processing according to the operation of the shopper 4.

The CPU 12a controls the printer 12h and issues the transaction receipt with the transaction code corresponding to the integrated transaction information recorded in the RAM 12c or the auxiliary storage unit 12d, as well as the result of the settlement processing. Thus, a process for a single transaction is ended. Thereafter, the CPU 12a returns to Act 21 and the processing after the Act 21 is performed in the same manner as those described above.

In the checkout system according to the present embodiment, the transaction information generated with respect to each of the plurality of transactions in a single registration machine 11 or different transaction information generated with respect to different transactions in different registration machines 11 can be collected into an integrated transaction information to processed in a single accounting machine 12. Accordingly, for example, even when a family or other group comes for shopping divide the merchandise intended to purchase, and separately register the merchandise in the registration machines 11, the shopper 4 does not need to repeat the settlement operation (cash input or the like) on a per transaction basis. Thus, a workload of the shopper 4 can be reduced. Since each transaction information generated by a plurality of registration processing is collected into a single integrated transaction information to be subject to the settlement processing, management and purchase of the merchandise by the shopper 4 becomes easier.

In the description described above, although the transaction information transmitted from the registration machines 11A and 11B is transferred to the accounting machine 12 which execute the accounting processing through the server 13, the transaction information may be transmitted directly from the registration machines 11A and 11B to the accounting machine 12. In this case, the registration machines 11A and 11B each have, for example, a unique identifier included in the transaction code printed on the accounting coupon receipt. The accounting machine 12 extracts the unique identifier from the transaction code read from the accounting coupon receipt and sends a request to the registration machine 11 indicated by the unique identifier for the transaction information.

Accordingly, when the transaction codes are read from a plurality of the accounting receipts for the collective accounting, the accounting machine 12 requests the registration machine indicated by each transaction code (and the unique identifier encoded therein) for the corresponding transaction information. For example, when the transaction code is read from the accounting receipt issued from each of the registration machines 11A and 11B, the accounting machine 12A requests the corresponding registration machines 11A and 11B for the respectively generated transaction information. The accounting machine 12A integrates the transaction information received from each of the registration machines 11A and 11B and collectively settles the integrated transaction information.

In the description described above, the accounting receipt issued by the registration machine 11 is read by the accounting machine 12. Thus, the accounting processing can be executed in the accounting machine 12. However, the accounting machine 12 may be allowed to execute the accounting processing without using the accounting receipt.

For example, when the registration processing is ended in the registration machine 11A, a request to execute the accounting processing is transmitted to at least one of the plurality of the accounting machines 12A1, 12A2, 12B1, and 12B2. The accounting machines 12A1, 12A2, 12B1, and 12B2 determine any one of the accounting machines, for example, the accounting machine 12A1, which is caused to execute the accounting processing according to the request to execute the accounting processing from the registration machine 11A. The accounting machine selected to execute the accounting processing may be determined based on one or more conditions set in advance, such that the accounting machine which is in a free state (standby state), located nearest to the registration machine 11A of a requesting source is selected, or the like. The accounting machine 12A1 notifies the registration machine 11A that the accounting machine 12A1 can execute the accounting processing. The registration machine 11A transmits the transaction information to the accounting machine 12A1 according to the notification from the accounting machine 12A1.

In the checkout system according to the present embodiment, the collective accounting may be performed regarding a plurality of transactions. That is, the accounting machine 12A1 integrates the transaction information received by notifying the execution of the accounting processing to the registration machine 11A and the transaction information received by reading the accounting receipt and performs the collective accounting on the integrated transaction information.

For example, when the shopper 4 intends to perform the collective accounting with other transactions, the shopper 4 informs the employee 2-1 at the registration machine 11 accordingly. The registration machine 11 issues an accounting receipt with respect to the transaction according to the instruction from the employee 2-1, as described above.

When an instruction to perform the collective accounting with other transactions is provided by the shopper 4, and when the accounting processing is performed for the transaction information received from the registration machine 11A, the accounting machine 12A1 is made to transition to a state for reading the accounting receipt. When the transaction code is read from at least one accounting receipt, the accounting machine 12A1 receives the transaction information corresponding to the transaction code and integrates the received transaction information with the transaction information already received in advance to perform the settlement processing with respect to the integrated transaction information.

As such, basically, in the checkout system which allows the accounting machine 12 to execute the accounting processing without using the accounting receipt, an accounting receipt is issued for the transaction to be used for the collective accounting, and the accounting machine 12A1 is caused to read the accounting receipt. Thus, the collective accounting can be performed by integrating the different transaction information.

The process described above may be provided to various devices as a program capable of being executed by a computer by being written in a recording medium, for example, a magnetic disk (flexible disk, hard disk, or the like), an optical disk (CD-ROM, DVD, or the like), or a semiconductor memory. The program can be provided to various devices by being transmitted through a communication medium. The computer reads the program recorded in the recording medium, receives the program through the communication medium, operations of the computer are controlled by the program, and thus, executes the above-described process.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their équivalents are intended to cover such forms or modifications as would fall within the scope and framework of the inventions.

## Claims

1. A checkout system comprising:
at least one registration device; and
a plurality of accounting machines, wherein
the at least one registration devices includes:
a first communication interface,
a first input device configured to receive input of merchandise information for merchandise items to be purchased in a transaction,
a storage unit configured to store transaction information including the input merchandise information for each of one or more of the merchandise items to be purchased in the transaction, and
a first controller configured to:
generate a transaction identification that uniquely identifies the transaction information corresponding to the transaction,
control the first communication interface to transmit the transaction information in correspondence with the transaction
identification, and
each of the plurality of accounting machines includes
a second communication interface,
a second input device configured to receive input of a user instruction, and
a second controller configured to:
in response to the user instruction, control the second communication interface to transmit a plurality of requests for transaction identification corresponding to different transactions, each request including different transaction identifications,
control the second communication interface to receive the different transaction information corresponding to each different transaction identification included in the plurality of requests,
integrate the received different transaction information into an integrated transaction information, and
process, in a single payment operation, payment with respect to each different transaction information included in the integrated transaction information.

2. The system according to claim 1, wherein the at least one registration device further includes a printer configured to print, for each transaction, an accounting receipt that includes the transaction identification.

3. The system according to claim 1 or 2, wherein each of the plurality of accounting machines further includes:
a scanner configured to input each of the different transaction identification by scanning the accounting receipt.

4. The system according to any one of claims 1 to 3, wherein the first communication interface transmits the transaction information in correspondence with the transaction identification to a server.

5. The system according to claim 4, wherein the second communication interface transmits the plurality of requests for transaction identification corresponding to different transactions to the server, and receives the different transaction information corresponding to each different transaction identification included in the plurality of requests from the server.

6. The system according to any one of claims 1 to 5, wherein the first communication interface receives at least one of the plurality of requests, and transmits the transaction information in correspondence with the transaction identification to one of the accounting machines in response to the received at least one request.

7. The system according to claim 6, wherein the second communication interface transmits the plurality of requests for transaction identification corresponding to different transactions to the at least one registration machine, and receives the different transaction information corresponding to each different transaction identification included in the plurality of requests from the at least one registration machine.

8. An accounting machine for processing a single payment for a plurality of transactions, the machine comprising:
a communication interface;
an input device configured to receive input of different transaction identification that uniquely identifies each of the plurality of transactions; and
a controller configured to:
control the communication interface to transmit a plurality of requests for transaction information corresponding to each of the plurality of transactions, each request including one of the different transaction identifications,
control the communication interface to receive the different transaction information corresponding to each different transaction identification included in the plurality of requests,
integrate the received different transaction information into an integrated transaction information, and
process, in a single payment operation, payment with respect to each different transaction information included in the integrated transaction information.

9. The accounting machine according to claim 8, wherein the input device is a scanner configured to input each of the different transaction identification by scanning an accounting receipt.

10. The accounting machine according to claim 8 or 9, wherein the communication interface transmits the plurality of requests for transaction identification corresponding to different transactions to a server, and receives the different transaction information corresponding to each different transaction identification included in the plurality of requests from a server.

11. The accounting machine according to any one of claims 8 to 10, wherein the communication interface transmits the plurality of requests for transaction identification corresponding to different transactions to at least one registration machine that generated the transaction identification, and receives the different transaction information corresponding to each different transaction identification included in the plurality of requests from the at least one registration machine.

12. The accounting machine according to any one of claims 8 to 11, further comprising a display that displays details of the integrated transaction information.

13. The accounting machine according to claim 12, wherein the details include a total payment required for the plurality of transactions.

14. The accounting machine according to any one of claims 8 to 13, further comprising:
a second input device that receives an input selecting whether to process the payment for the plurality of transactions or to process the payment for a single transaction, wherein, when the input is received selecting to process the payment for a single transaction, the controller is further configured to:
control the communication interface to transmit one request for transaction information corresponding to the single transaction, the request including one of the different transaction identifications,
control the communication interface to receive the transaction information corresponding to the transmitted transaction identification included in the request, and
process, in a single payment operation, payment with respect to the received transaction information.

15. A non-transitory computer readable medium containing instructions for causing a computer to perform the steps of:
receiving input of different transaction identifications that uniquely identify each of a plurality of transactions;
transmitting a plurality of requests for transaction information corresponding to each of the plurality of transactions, each request including one of the different transaction identifications;
receiving the different transaction information corresponding to each different transaction identification included in the plurality of requests;
integrating the received different transaction information into an integrated transaction information; and
processing, in a single payment operation, payment with respect to each different transaction information included in the integrated transaction information.
